# EUROPEAN PATENT SPECIFICATION

(11) **EP 4 514 621 B1**
(45) Date of publication and mention of the grant of the patent: **28.01.2026**
(21) Application number: 23725298.6
(22) Date of filing: 26.04.2023
(51) Int. Cl.: B60C 1/00, C08L 7/00

(54) **TYRE FOR VEHICLE WHEELS**
LUFTREIFEN FÜR FAHRZEUGRÄDER
PNEU POUR ROUES DE VÉHICULE

(30) Priority: 28.04.2022 IT 202200008486
(43) Date of publication of application: 05.03.2025
(73) Proprietor: Pirelli Tyre S.p.A., 20126 Milano (IT)
(72) Inventor: GIANNINI, Luca, 20126 Milano (IT); GUERRA, Silvia, 20126 Milano (IT); TADIELLO, Luciano, 20126 Milano (IT); RESMINI, Emiliano, 20126 Milano (IT)
(74) Representative: PGA S.p.A.
(86) International application number: PCT/IB2023/054295
(87) International publication number: WO 2023/209588

(56) References cited:
- EP-A1- 3 558 703
- EP-B1- 3 558 703
- WO-A1-2021/255654
- US-A1- 2020 299 482

## Description

### FIELD OF THE INVENTION

The present invention relates to a tyre for vehicle wheels. More particularly, the present invention relates to a tyre for vehicle wheels comprising at least one structural component comprising a vulcanised elastomeric compound obtained by vulcanising a vulcanisable elastomeric compound made by mixing an elastomeric composition comprising (i) at least one diene elastomeric polymer, and (ii) a reinforcing filler comprising (a) needle-shaped morphology silicate fibres having nanometric size, (b) carbon nanotubes, and (c) optionally, carbon black and/or conventional silica.

### STATE OF THE ART

In the rubber industry, and more particularly in the tyre industry, it is known to add reinforcing fillers to the elastomeric compositions in order to improve the mechanical properties and the abrasion resistance of the elastomeric materials obtained therefrom by vulcanisation.

Due to its high reinforcing efficiency, carbon black is a particularly used reinforcing filler. However, carbon black represents a non-renewable raw material, deriving mainly from partial combustion processes of fossil fuels, mainly naphtha, methane gas, and other hydrocarbons. In addition, carbon black can be of environmental concern as it is a potential pollutant if not properly disposed of. Carbon black also helps to increase the hysteresis values and consequently the rolling resistance of the tyre and fuel consumption. The replacement or reduction of the use of carbon black therefore represents an objective not only of interest for tyre manufacturers, but of common interest for the community.

Other currently used reinforcing materials are so-called "white" fillers, such as talc, kaolin, bentonite, titanium dioxide, silica, silicate fibres such as sepiolites and recently, modified sepiolites, fillers that can partially or completely replace carbon black in elastomeric materials and impart a lower hysteresis to them, maintaining a sufficient reinforcement.

Among the white fillers, the silicate fibres, more particularly the sepiolites and the modified sepiolites, have proved particularly promising in terms of hysteretic and mechanical properties of the elastomeric materials in which they are incorporated, in place of or in addition to the traditional fillers, and proved to give the tyres reduced rolling resistance, better stiffness and abrasion resistance.

At the industrial level, the incorporation of these nanometric fibres into the elastomeric materials, carried out by mixing directly into solid elastomeric matrix in conventional batch mixers, such as open mixers, or internal mixers of the tangential rotor type, such as for example Banbury^{®}, or with interpenetrating rotors, Intermix type, appears to be difficult due to the high powderiness of these fibres.

In fact, once dried from the residual water coming from the extraction process from the original minerals or from any subsequent derivatisation reactions, these fibres assume a powdery consistency, with a low apparent density which, for example in the case of organically modified sepiolite (Pangel B5 of Tolsa) is about 210 g/l and in the case of unmodified sepiolite (Pangel S9 of Tolsa) is decreases further to 60 g/l.

Due to the high powderiness, these fibres easily disperse in the air and are difficult to handle and add to the other components in the mixers, creating problems of dosage, dispersibility, contamination of the working environment, potential toxicity for the operators and also possible damage to the machines themselves.

To avoid these drawbacks, which generally arise in the use of powdery compounds in industrial plants, one can resort to their incorporation into solid masterbatch compositions (MB), compositions which trap the powders in dense matrices making them more manageable and easier to manage.

For example, patent application WO2018/116125 in the name of the same Applicant describes a process for the preparation of a solid masterbatch elastomeric composition comprising needle-shaped morphology silicate fibres of nanometric size dispersed in at least one diene elastomer and tyres for vehicle wheels comprising such compositions in replacement of carbon black.

A possible alternative consists in preparing silica aggregates in the form of non-pulverulent microbeads which can then, when incorporated into the elastomeric materials, disaggregate and disperse the silica well in the matrix.

For example, patent application WO2019/106562 in the name of the same Applicant describes a process for the preparation of a composition in the form of microbeads comprising needle-shaped morphology silicate fibres of nanometric size and silica, and tyres for vehicle wheels comprising such compositions as a replacement for carbon black.

In a vehicle provided with tyres in which the carbon black is partially or totally replaced with needle-shaped morphology silicate fibres, a phenomenon of accumulation of static electricity is generated since the silicate fibres, unlike carbon black, are not conductive, and therefore do not allow the static electricity generated by the rolling of the wheels and the consequent movement of the vehicle to be discharged to the ground.

In order to overcome this drawback, which also occurs when carbon black is replaced with other non-conductive materials, for example silica-based reinforcing fillers, tyre manufacturers have had to implement additional processes and/or components. For example, tyres have been manufactured comprising a conductive strip, made with compounds comprising carbon black or other conductive materials, immersed in the tread structure and/or sidewalls, in order to provide the appropriate grounding of the vehicle.

Examples of embodiments of such tyres are described in EP658452 in the name of the same Applicant. The production of such a conductive strip involves greater complexities. From the production point of view, the production of this strip requires the use of an additional step and more complex equipment in the extrusion of the compound which will form the tread of the tyre. From a structural point of view, the presence of this strip, constituting a chemical-physical separation element within the elastomeric material, requires the use of a particular compound to avoid triggering early wear phenomena, reducing the mileage of the tyre.

### SUMMARY OF THE INVENTION

The Applicant has set itself the objective of solving the conductivity problems associated with the incorporation of needle-shaped morphology silicate fibres of nanometric size in the elastomeric compositions for tyres.

The Applicant has therefore faced the dilemma between the conductivity problem, typical of the replacement of traditional carbon black reinforcing fillers with white fillers, and the problem of the environmental impact and of the increase in hysteresis and rolling resistance, typical of use of traditional carbon black reinforcing fillers.

The Applicant has found that by using a reinforcing filler comprising needle-shaped morphology silicate fibres of nanometric size and carbon nanotubes in partial or total replacement of carbon black in the elastomeric compositions for tyres, in addition to solving the conductivity problems, an unexpected reduction of hysteresis and Payne effect was also observed.

The Payne effect is a phenomenon that occurs with a reduction of the dynamic modulus that is more marked when the deformation to which the elastomeric material is subjected is higher. In practical terms, just when the tyre is most stressed and then just when the elastomeric material should show the best mechanical performance, the reinforcing effect of the filler is however lacking. Such phenomenon, typical of reinforcing fillers but in particular of silica, is due to the fact that under dynamic conditions, i.e. when the elastomeric material filled with silica and vulcanised is stressed in the tyre in use, a partial breakdown of the dispersed filler can occur that adversely affects the mechanical properties.

Small hysteresis values reduce the heat dissipated under dynamic conditions. In tyres, this translates into a reduction in rolling resistance, and overall into lower fuel consumption, lower production of polluting emissions and lower transport costs.

This result is all the more surprising in view of the fact that it was generally known that the use of carbon nanotubes, characterised by a very high surface area, led to an increase in hysteresis.

While not wanting to be bound by any specific explanation, the Applicant hypothesises that this surprising result is due to the interactions between the needle-shaped structure of the silicate fibres and the structure of the carbon nanotubes.

Therefore, a first aspect of the present invention is a tyre for vehicle wheels comprising at least one structural component comprising a vulcanised elastomeric compound obtained by vulcanising a vulcanisable elastomeric compound made by mixing an elastomeric composition comprising (i) at least one diene elastomeric polymer, and (ii) a reinforcing filler comprising (a) needle-shaped morphology silicate fibres having nanometric size, (b) carbon nanotubes, and (c) optionally, carbon black and/or conventional silica.

In a second aspect thereof, the present invention relates to an elastomeric composition comprising per 100 phr of diene elastomeric polymer:
(i) 5 phr to 50 phr, preferably 10 phr to 40 phr, of needle-shaped morphology silicate fibres having nanometric size,
(ii) 0.1 phr to 10 phr of carbon nanotubes,
(iii) optionally, 5 phr to 60 phr of carbon black and/or conventional silica,
(iv) 0.1 phr to 12 phr of at least one vulcanising agent, and
(v) 0.1 phr to 15 phr of a coupling agent.

Advantageously, the needle-shaped morphology silicate fibres of nanometric size are added to the elastomeric composition in the form of (a1) a solid masterbatch elastomeric composition comprising needle-shaped morphology silicate fibres of nanometric size dispersed in at least one diene elastomer, as described in WO2018/116125, and/or (a2) microbeads comprising needle-shaped morphology silicate fibres of nanometric size and silica, as described in WO2019/106562.

### DEFINITIONS

The term "elastomeric composition" means a composition comprising at least one diene elastomeric polymer and one or more additives, which by mixing and possible heating provides an elastomeric compound suitable for use in tyres and components thereof.

The components of the elastomeric composition are not generally introduced simultaneously into the mixer but typically added in sequence. In particular, the vulcanisation additives, such as the vulcanising agent and possibly the accelerant and retardant agents, are usually added in a downstream step with respect to the incorporation and processing of all the other components.

In the final vulcanisable elastomeric compound, the individual components of the elastomeric composition may be altered or no longer individually traceable as modified, completely or in part, due to the interaction with the other components, of heat and/or mechanical processing. The term "elastomeric composition" herein is meant to include the set of all the components that are used in the preparation of the elastomeric compound, regardless of whether they are actually present simultaneously, are introduced sequentially or are then traceable in the elastomeric compound or in the final tyre.

The term "elastomeric polymer" indicates a natural or synthetic polymer which, after vulcanisation, may be stretched repeatedly at room temperature to at least twice its original length and after removal of the tensile load substantially immediately returns with force to approximately its original length (according to the definitions of the ASTM D1566-11 Standard terminology relating to Rubber).

The term "diene elastomeric polymer" indicates a polymer or copolymer derived from the polymerisation of one or more different monomers, among which at least one of them is a conjugated diene (conjugated diolefin).

The term "elastomeric compound" indicates the compound obtainable by mixing and possibly heating at least one elastomeric polymer with at least one of the additives commonly used in the preparation of tyre compounds.

The term "vulcanisable elastomeric compound" indicates the elastomeric compound ready for vulcanisation, obtainable by incorporation into an elastomeric compound of all the additives, including those of vulcanisation.

The term "vulcanised elastomeric compound" means the material obtainable by vulcanisation of a vulcanisable elastomeric compound.

The term "green" indicates a material, a compound, a composition, a component or a tyre not yet vulcanised.

The term "vulcanisation" refers to the cross-linking reaction in a natural or synthetic rubber induced by a typically sulphur-based cross-linking agent.

The term "vulcanising agent" indicates a product capable of transforming natural or synthetic rubber into elastic and resistant material by virtue of the formation of a three-dimensional network of inter- and intra-molecular bonds. Typical vulcanising agents are sulphur-based compounds such as elemental sulphur, polymeric sulphur, sulphur-donor agents such as bis[(trialkoxysilyl)propyl]polysulphides, thiurams, dithiodimorpholines and caprolactam-disulphide.

The term "vulcanisation accelerant" means a compound capable of decreasing the duration of the vulcanisation process and/or the operating temperature, such as sulphenamides, thiazoles, dithiophosphates, dithiocarbamates, guanidines, as well as sulphur donors such as thiurams.

The term "vulcanisation activating agent" indicates a product capable of further facilitating the vulcanisation, making it happen in shorter times and possibly at lower temperatures. An example of activating agent is the stearic acid-zinc oxide system.

The term "vulcanisation retardant" indicates a product capable of delaying the onset of the vulcanisation reaction and/or suppressing undesired secondary reactions, for example N-(cyclohexylthio)phthalimide (CTP).

The term "vulcanisation package" is meant to indicate the vulcanising agent and one or more vulcanisation additives selected from among vulcanisation activating agents, accelerants and retardants.

The term "reinforcing filler" is generally meant to refer to a reinforcing material typically used in the sector to improve the mechanical properties of tyre rubbers, preferably selected from among carbon black, conventional silica, diatomaceous earth, calcium carbonate, titanium dioxide, talc, alumina, aluminosilicates, kaolin, silicate fibres and mixtures thereof.

The term "conventional silica" means silica (typically from sand) precipitated with strong acids, preferably amorphous, pyrogenic silica, wet silica, anhydrous silica, or mixtures thereof, with a surface area BET (measured according to the ISO 5794/1 standard) between 50 m²/g and 500 m²/g, preferably between 70 m²/g and 200 m²/g.

The term "mixing step (1)" indicates the step of the preparation process of the elastomeric compound in which one or more additives may be incorporated by mixing and possibly heating, except for the vulcanising agent which is fed in step (2). The mixing step (1) is also referred to as "non-productive step". In the preparation of a compound there may be several "non-productive" mixing steps which may be indicated with 1a, 1b, etc.

The term "mixing step (2)" indicates the next step of the preparation process of the elastomeric compound in which the vulcanising agent and, possibly, the other additives of the vulcanisation package are introduced into the elastomeric compound obtained from step (1), and mixed in the material, at controlled temperature, generally at a compound temperature lower than 120°C, so as to provide the vulcanisable elastomeric compound. The mixing step (2) is also referred to as "productive step".

The terms "radial" and "axial" and the expressions "radially internal/external" and "axially internal/external" are used referring respectively to a direction substantially parallel to the equatorial plane of the tyre and to a direction substantially perpendicular to the equatorial plane of the tyre, i.e. respectively to a direction substantially perpendicular to the axis of rotation of the tyre and to a direction substantially parallel to the axis of rotation of the tyre.

The terms "circumferential" and "circumferentially" are used with reference to the direction of the annular extension of the tyre, i.e. to the rolling direction of the tyre, which corresponds to a direction lying on a plane coinciding with or substantially parallel to the equatorial plane of the tyre.

By "substantially axial direction" it is meant a direction inclined, with respect to the equatorial plane of the tyre, by an angle of between about 70° and about 90°.

By "substantially circumferential direction" it is meant a direction stretched, with respect to the equatorial plane of the tyre, at an angle of between about 0° and about 10°.

For the purposes of the present description and the following claims, the term "phr" (acronym for parts per hundreds of rubber) indicates the parts by weight of a given elastomeric compound component per 100 parts by weight of the elastomeric polymer, considered net of any extension oils.

Unless otherwise indicated, all the percentages are expressed as percentages by weight.

### DETAILED DESCRIPTION OF THE INVENTION

The present invention is characterized by one or more of the following preferred aspects, taken individually or in combination.

### Vulcanisable elastomeric composition

The vulcanisable elastomeric composition used to make a structural component of a tyre according to the present invention comprises, per 100 phr of diene elastomeric polymer, at least
(i) 5 phr to 50 phr, preferably 10 phr to 40 phr, of needle-shaped morphology silicate fibres having nanometric size,
(ii) 0.1 phr to 10 phr of carbon nanotubes,
(iii) optionally, 5 phr to 60 phr of carbon black and/or conventional silica,
(iv) 0.1 phr to 12 phr of at least one vulcanising agent, and
(v) 0.1 phr to 15 phr of a coupling agent.

The vulcanisable elastomeric composition for components of tyres according to the present invention is characterized by one or more of the following preferred aspects taken alone or in combination with one another.

### Diene elastomeric polymer

The diene elastomeric polymer that is used in the present invention may be selected from those commonly used in sulphur-cross-linkable elastomeric materials, which are particularly suitable for producing tyres, i.e. from elastomeric polymers or copolymers with an unsaturated chain having a glass transition temperature (Tg) generally lower than 20°C, preferably in the range of from 0°C to -110°C. These polymers or copolymers may be of natural origin or may be obtained by solution polymerisation, emulsion polymerisation or gas-phase polymerisation of one or more conjugated diolefins, optionally mixed with at least one comonomer selected from monovinylarenes and/or polar comonomers.

The conjugated diolefins generally contain from 4 to 12, preferably from 4 to 8 carbon atoms and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene or mixtures thereof. 1,3-butadiene and isoprene are particularly preferred.

Monovinylarenes, which may optionally be used as comonomers, generally contain from 8 to 20, preferably from 8 to 12 carbon atoms and may be selected, for example, from: styrene; 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolyl-styrene, 4-(4-phenylbutyl)styrene, or mixtures thereof. Styrene is particularly preferred.

Polar comonomers that may optionally be used, can be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile or mixtures thereof.

Preferably, the diene elastomeric polymer which can be used in the present invention can be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

A diene elastomeric polymer functionalised by reaction with suitable terminating agents or coupling agents may also be used. In particular, the diene elastomeric polymers obtained by anionic polymerisation in the presence of an organometallic initiator (in particular, an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes.

### Silicate fibres of nanometric size with needle-shaped morphology

Silicate fibres with needle-shaped morphology of nanometric size are selected from the group consisting of magnesium and/or aluminium and/or calcium silicate fibres and mixtures thereof.

Preferably, the silicate fibres with needle-shaped morphology of nanometric size are selected from 2:1 phyllosilicates characterized by an "inverted ribbons" structure as described in "Bergaya, F., Jaber, M. and Lambert, J.-F. (2011) Clays and Clay Minerals, in Rubber-Clay Nanocomposites: Science, Technology, and Applications (ed. M. Galimberti), John Wiley & Sons, Inc., Hoboken, NJ, USA. doi: 10.1002/9781118092866.ch1 "

Preferably, the silicate fibres with needle-shaped morphology of nanometric size are selected from sepiolite fibres, modified sepiolite fibres, paligorskite fibres (also known as attapulgite), wollastonite fibres, imogolite fibres and mixtures thereof, more preferably they are sepiolite fibres modified sepiolite or mixtures thereof.

The silicate fibres with needle-shaped morphology differ from lamellar silicates, such as bentonite, alloisite, vermiculite or hydrotalcite, at least in the average aspect ratio. More particularly, considering a particle having three dimensions a, b, c where a> b> c, a particle may be defined lamellar when (3 x a/b) < b/c, while a particle may be defined needle-shaped when (2 x a/b) > b/c.

The term "fibres with needle-shaped morphology" means fibres having a dimension (length) much greater than the diameter or the maximum cross-sectional dimension. In particular, it is meant that said fibres have a ratio between the largest dimension (length) and the diameter or the maximum cross-sectional dimension (aspect ratio) of at least 2:1, preferably of at least 3:1, more preferably of at least 5:1 or at least 10:1.

Preferably, the fibres have an aspect ratio not greater than 1000:1, more preferably not greater than 100:1.

Preferably, said ratio is evaluated by microscopic observation, preferably performed on at least one hundred fibres.

Preferably, at least 70%, 80%, 90% of the fibres have the above aspect ratio.

The expression "nanometric size" referred to fibres means that the fibres have a diameter or maximum cross-sectional dimension of less than 500 nm.

Preferably, said fibres have a diameter or a maximum cross-sectional dimension of between 1 and 100 nm, more preferably of between 5 and 50 nm, even more preferably of between 15 and 20 nm.

Preferably, said fibres have a length of less than 10 microns, more preferably between 0.1 and 10 microns, even more preferably of between 0.1 and 5 microns. Generally, sepiolite is needle-shaped and has aspect ratios of from 3:1 to 1000:1, more commonly from 5:1 to 100:1.

Generally, wollastonite is needle-shaped and has aspect ratios of from 3:1 to 20:1, more commonly from 10: 1 to 20:1.

Generally, imogolite is needle-shaped and has aspect ratios of from 5:1 to 100:1, more commonly from 5:1 to 50:1.

Examples of silicate fibres which can be used according to the present invention are the sepiolites marketed by Tolsa Group (http://www.tolsa.com/) under the name of Pangel S9 or Pansil 100.

In the present context, the term "silicate fibres with needle-shaped morphology of nanometric size" means also modified fibres, i.e. the fibres obtainable from silicate fibres with needle-shaped morphology of nanometric size by reaction of partial acid degradation, partial removal of magnesium, derivatisation - such as salification with organic compounds or silanisation, or superficial deposition, for example amorphous silica.

The silicate fibres with needle-shaped morphology of nanometric size may be obtained from silicate fibres with needle-shaped morphology of nanometric size selected from sepiolite fibres, paligorskite fibres (also known as attapulgite), wollastonite fibres, and mixtures thereof, more preferably modified sepiolite fibres or mixtures thereof.

In the present context, "modified silicate fibres with needle-shaped morphology of nanometric size" means for example the fibres modified by acid treatment with partial removal of magnesium up to a final content thereof comprised between 3.8% and 12%, which substantially retain the needle-shaped morphology and the original crystalline structure, described and exemplified in the patent application WO2016/174629A1 (in particular from page 9 to page 15 and from page 30 to page 34) and WO2018/078500A1 (in particular from page 8 to page 14 and from page 32 to page 34), on behalf of the Applicant.

These acid-modified fibres may be optionally further derivatised, for example by addition of at least one silanising agent to the acid treatment suspension of the fibres. Preferably, the silanising agent is selected from mono- or bifunctional silanes with one or two or three hydrolysable groups such as bis-(triethoxysilylpropyl)disulphide (TESPD), bis[3-(triethoxysilyl)propyl]tetrasulphide (TESPT), 3-thio-octanoyl-1-propyltrietoxysilane (NXT), Me₂Si(OEt)₂), Me₂PhSiCl, Ph₂SiCl₂, more preferably it is selected from TESPD and TESPT.

Other examples of suitable modified fibres are the silicate fibres with needle-shaped morphology of nanometric size comprising amorphous silica deposited on the surface, described and exemplified in the patent application WO2016/174628A1 (in particular from page 7 to page 12 and from page 22 to page 23) on behalf of the Applicant, or the sepiolite fibres organically modified by reaction with quaternary ammonium salts (talloyl benzyl dimethyl ammonium chloride) marketed by Tolsa under the name Pangel B5.

Finally, the term "silicate fibres with needle-shaped morphology of nanometric size" also means possible mixtures of one or more of said fibres and/or one or more of said modified fibres.

Preferably, said "silicate fibres with needle-shaped morphology of nanometric size" are sepiolite or modified sepiolite fibres, for example but not only, for treatments with acids, described in the cited documents WO2016/174629A1 and WO2018/078500A1, by derivatisation with quaternary ammonium salts (for example Pangel B5 of Tolsa) or by deposition on the surface of nascent silica according to the process reported in the document WO2016/174628A1.

### Solid masterbatch elastomeric composition

The term solid masterbatch elastomeric composition or masterbatch (MB) refers to a concentrated solid composition with an elastomeric matrix comprising silicate fibres of nanometric size with a needle-shaped morphology.

Preferably, the solid masterbatch elastomeric composition useful for the purposes of the present invention consists essentially of the elastomeric matrix and of said needle-shaped morphology silicate fibres having nanometric size.

The elastomeric matrix comprises at least one diene elastomer, generally comprising mixtures of two or more diene elastomers.

Preferably the at least one diene elastomer present in the elastomeric matrix is selected from natural rubber (NR), butadiene rubber (BR), styrene-butadiene rubber (SBR) and mixtures thereof.

In particular, the solid masterbatch elastomeric composition consists of
- 100 phr of at least one diene elastomer, and
- at least 50 phr, 60 phr, 70 phr, 80 phr or 90 phr of needle-shaped morphology silicate fibres having nanometric size.

Preferably, said solid masterbatch elastomeric composition consists of
- 100 phr of at least one diene elastomer, and
- 50 to 200 phr, more preferably 60 to 150 phr of needle-shaped morphology silicate fibres having nanometric size.

Advantageously, said solid masterbatch elastomeric composition consists of
- 100 phr of at least one diene elastomer, and
- 100 phr of silicate fibres having nanometric size with needle-shaped morphology.

Preferably, said fibres are sepiolite fibres or modified sepiolite fibres or mixtures thereof.

Preferably, the solid masterbatch elastomeric composition is characterised by a good uniformity of distribution of the fibres in the elastomeric matrix, already detectable visually in terms of colour homogeneity of the clots.

The present solid masterbatch elastomeric composition according to the invention allows easy incorporation of needle-shaped morphology silicate fibres having nanometric size into elastomeric compositions for tyres.

### Preparation of the solid masterbatch elastomeric composition

The process for the preparation of the solid masterbatch elastomeric composition useful in the present invention is a preferably discontinuous process, also referred to as a batch process as described in WO2018/116125.

By discontinuous process, it is meant a process in which the components of the composition are periodically fed to a suitable apparatus, in predefined quantities (batches) and placed in contact for a predetermined time so as to obtain the elastomeric composition. Once obtained, the elastomeric composition is completely discharged from the apparatus in a single solution.

Suitable devices for the preparation of the solid masterbatch elastomeric composition are for example the IKA Master Plant MP 10 or Silverson 700X mixers.

Alternatively, the masterbatch elastomeric composition may be prepared with continuous processes, in which the conditions set forth in the present description are met.

The process provides for providing an elastomeric latex comprising at least one diene elastomer and an aqueous phase.

The elastomeric latex may be a latex of natural or synthetic origin, preferably it is a latex of natural origin (natural rubber or NR), for example obtained from tropical plants of the Euforbiaceae family such as Hevea Brasiliensis and Hevea Guaianensis.

Preferably, the elastomeric latex has an elastomeric content of from 10% to 60%, preferably at least 15%, at least 30%, at least 40% w/w.

Optionally, the latex may be diluted with water before being placed in contact with the fibres. Preferably, the latex, if diluted by adding water, has an elastomeric content after dilution of between 10% and 60% w/w.

Generally, in the possible dilution of the latex, account is taken of the optimal volumetric ratio for the precipitation, which it is desired to impart to the final aqueous suspension.

Preferably, the elastomeric latex has a pH of between 9 and 12, more preferably between 9 and 11.

Preferably, the elastomeric latex comprises basic substances, more preferably ammonia, which keep the pH of the latex constant in a range from 9 to 12 and stabilise it. In fact, commercial natural rubber elastomeric latex is also named based on the ammonia content as HA grade latex, with high ammonia content, or MA with medium content.

The elastomeric latex comprises at least one diene elastomer, generally comprising mixtures of two or more diene elastomers.

Preferably the at least one diene elastomer present in the latex is selected from natural rubber (NR), styrene-butadiene rubber (SBR) and mixtures thereof.

Commercial examples of suitable elastomeric latexes are Von Bundit MA latex (60% elastomer pH 8-11) and Von Bundit HA (60% elastomer, pH 9-12) and Centex FA latex (60% elastomer, pH 9-12).

In the present process, the weight ratio between fibres and latex elastomer has proved to be important for obtaining homogeneous and quantitative clots. Preferably, the fibre to elastomer weight ratio of the latex is at least 0.6:1, at least 0.7:1, at least 0.8:1 or at least 0.9:1.

Preferably, the weight ratio between fibres and latex elastomer is in the range of 0.5:1 to 1.5:1, 0.7:1 to 1.3:1, 0.9:1 to 1.1:1, more preferably is around 1:1.

Preferably, the fibres are supplied in the process and are then present in the solid masterbatch elastomeric composition in an amount of at least 50 phr, at least 55 phr, at least 60 phr, at least 70 phr, more preferably at least 80 phr, at least 90 phr or at least 100 phr, per 100 parts by weight of the diene elastomer.

Preferably, the fibres are provided in the process and are then present in the solid masterbatch elastomeric composition in an amount comprised between 50 and 200 phr, preferably between 60 and 150 phr, more preferably between 80 and 120 phr, per 100 parts by weight of the diene elastomer.

The quantity of fibres to be supplied for the preparation of the present solid masterbatch composition indicated above is to be understood as referring to the weight of the dried fibres, i.e. with a residual water content lower than 10%, preferably lower than 5%.

Preferably, wet fibres, comprising residual water, from previous aqueous-phase treatments in high amounts, generally in the range of 50 to 95%, are used in the process. The residual water content may be easily determined by TGA and considered in calculating the effective weight of the fibres necessary to respect the aforementioned weight ratios between the fibres and the elastomer.

In the process, the fibres are placed in contact with the elastomeric latex to give an aqueous suspension.

In one embodiment, the fibres may be added as such, in the absence of solvent, to the latex provided that the correct volumetric ratios of the final suspension are respected, by possible prior dilution of the latex or addition of a further aqueous phase after the addition of the fibres.

Preferably, the coagulation medium in the process is essentially aqueous.

Preferably, the fibres are previously suspended in water, by using suitable mixing techniques such as sonication (ultrasound), mechanical stirring, magnetic stirring, impeller stirring or other means suitable to give a homogeneous aqueous suspension (A).

Preferably, the mixing to give the suspension (A) is continued for a time of from 5 to 60 minutes, preferably from 10 to 30 minutes. In the case of mechanical stirring, the speed is preferably kept between 200 and 1000 rpm.

Preferably, for the preparation of the suspension (A), deionised or distilled water is used.

Preferably, the aqueous suspension (A) comprises said fibres in an amount with respect to water of between 10 and 100 g/l, more preferably between 30 and 60 g/l.

The elastomeric latex may be used as such or suitably diluted with water to give a diluted suspension (B), preferably until having an elastomer content between 5% and 60%, preferably between 15% and 60% (w/v).

Preferably, the fibres are added in the form of an aqueous suspension (A).

In the process, the aqueous suspension (A) may be added to the elastomeric latex or suspension (B) (direct addition) or, alternatively, the elastomeric latex or suspension (B) may be added to the suspension (A) (reverse addition) to give an aqueous suspension.

The addition, direct or reverse, is generally carried out in a period of time ranging from a few minutes to 30' also depending on the reaction scale.

Preferably, the fibres are placed in contact with the latex under stirring and mixed throughout the duration of the latex coagulation and the precipitation of the masterbatch elastomeric composition.

Preferably, the precipitation is carried out under stirring.

Preferably, the precipitation takes place in a time comprised between about 5 and 30 minutes.

Preferably, the coagulation of the latex is carried out at a temperature ranging from 10° to 50°C, more preferably from 20° to 30°C.

Preferably, the volume ratio of the aqueous suspension (C) obtained by placing the fibres in contact with the elastomeric latex, expressed as the volume of aqueous suspension with respect to the weight of the fibres, is between 15:1 and 25:1 ml/g, more preferably between 20:1 and 25:1 ml/g. This volumetric ratio may be obtained by suitably selecting the volume of the possible suspension of the fibres (A), of the latex or of the suspension (B) or, possibly, by adding more water to the suspension prepared by placing the suspension (A) in contact with the latex or the suspension (B), or in the case by removing water by evaporation from them.

Preferably, the pH of the suspension obtained by placing the fibres in contact with the elastomeric latex is in the range of from 7.5 to 11.

Preferably, said pH range is obtained by mixing the commercial latex, which generally has a pH of between 8 and 12, with the optional suspension (A) of the fibres, any further water and, if necessary, correcting the pH by adding bases or acids.

Preferably, the coagulation and precipitation of the elastomeric composition does not require the addition of any conventional primers, such as the addition of acids or salts.

Preferably, the precipitated masterbatch composition is separated from the aqueous phase by spontaneous decantation or centrifugation, followed by removal of the aqueous phase by suction or filtration.

Preferably, the precipitated masterbatch composition is filtered and, preferably, washed to neutrality.

Finally, the composition is preferably dried, for example in an oven, optionally under vacuum, until the weight is constant.

### Microbeads comprising needle-shaped morphology silicate fibres having nanometric size and silica

The term "microbeads" refers to particles of substantially spheroidal shape and with an average diameter of less than 500 microns. The average diameter of the microbeads may be determined by means of granulometric analysis by laser diffraction or Dynamic Light Scattering (DLS) according to ISO13320.

The microbeads are characterised by an average diameter preferably of at least 60, 70 or 80 microns. The microbeads are characterised by an average diameter preferably of between 60 and 400 microns, more preferably between 70 and 300 microns.

Advantageously, the microbeads comprise fine powders, i.e. particles with an average diameter of less than 50 microns, in an amount of less than 15%, preferably less than 10%, measured according to the ISO13320 method.

The microbeads comprise (A) silica and (B) needle-shaped morphology silicate fibres of nanometric size in a weight ratio A/B preferably comprised between 0.7:1 and 10:1, between 0.7:1 and 5:1, more preferably between 0.8:1 and 3:1, even more preferably between 0.9:1 and 2.5:1 or 0.9:1 and 1.1:1.

Advantageously, the microbeads comprise (A) silica and (B) needle-shaped morphology silicate fibres of nanometric size, in a weight ratio A/B equal to about 1:1.

The silica (A) and the needle-shaped morphology silicate fibres of nanometric size (B) together represent at least 90%, preferably at least 95% by weight of the dried microbeads. The 100% by weight component may comprise salts such as sodium sulphate, sodium chloride, magnesium sulphate or magnesium chloride, and traces of residual solvents.

The silica (A) included in the microbead is selected from pyrogenic silica, precipitated silica and mixtures thereof. Preferably, one or more precipitated amorphous silicates are used in the microbead according to the invention.

Preferably, precipitated amorphous silica are used, with a BET surface area (measured according to the ISO Standard 5794/1) of between 50 m²/g and 500 m²/g, preferably between 70 m²/g and 200 m²/g.

Commercial examples of silica (A) are the Zeosil 1165 MP silica from Rhodia, the ULTRASIL 7000 from Evonik and the Ebrosil H-155 AT from IQESIL.

Preferably, the content of silicates fibres (B) with needle-shaped morphology of nanometric size in the microbeads is at least 5%, preferably at least 10%, at least 20%, at least 30% or at least 40% by weight with respect to the weight of the microbeads.

Preferably, the content of silicates fibres (B) with needle-shaped morphology of nanometric size in the microbeads is between 5% and 65%, preferably between 10% and 60% or between 30% and 55% by weight with respect to weight of the microbeads.

The microbeads have an overall residual water content, after drying, of less than 8% by weight, generally between 4.5 and 7.5% by weight with respect to the weight of the microbeads.

In a preferred embodiment, the microbeads comprise the silica (A) and the silicate fibres (B) with needle-shaped morphology of nanometric size, wherein the fibres are sepiolite fibres or modified sepiolite fibres, and wherein the weight ratio A/B is between 0.9:1 and 1.1:1, preferably around 1:1.

In a preferred embodiment, the microbeads comprise the silica (A) and the sepiolite fibres or modified sepiolite fibres (B), wherein the weight ratio A/B is between 0.9:1 and 1.1, preferably around 1:1, and wherein said silica (A) and said fibres (B) in total constitute at least 90% by weight of the dried microbead.

In a preferred embodiment, the microbeads comprise the silica (A) and the sepiolite fibres or modified sepiolite fibres (B), and wherein the weight ratio A/B is between 0.9:1 and 1.1, preferably around 1:1 and said microbead has an average diameter of at least 70 microns.

In a preferred embodiment, the microbeads comprise the silica (A) and the sepiolite fibres or modified sepiolite fibres (B), wherein the weight ratio A/B is between 0.9:1 and 1.1:1, preferably around 1:1, and said microbead has an average diameter of at least 80 microns and wherein said silica (A) and said fibres (B) in total constitute at least 90% by weight of the dried microbeads.

### Preparation of the microbeads

The process for the preparation of microbeads comprising needle-shaped morphology silicate fibres of nanometric size and silica is characterised by one or more of the following parameters, individually or in combination, as also described in WO2019/106562.

Said process comprises providing an aqueous suspension comprising said silica (A) and said fibres (B) in weight ratio A/B of between 0.5:1 and 15:1 and in a total amount A + B equal to at least 5% by weight with respect to the weight of the suspension.

Preferably, the aqueous suspension comprises the silica (A) and the fibres (B) in a weight ratio A/B comprised between 0.7:1 and 10:1, between 0.7:1 and 5:1, more preferably between 0.8:1 and 3:1, even more preferably between 0.9:1 and 2.5:1 or between 0.9:1 and 1.1:1.

Preferably, the total amount A + B is at least 10% by weight, with respect to the weight of the aqueous suspension to be dried.

Preferably, the total amount of silica (A) and fibres (B) is between 5% and 40% or between 10% and 30% by weight, with respect to the weight of the aqueous suspension to be dried.

Preferably, said fibres (B) are commercial sepiolite or modified sepiolite fibres (for example Pangel B5 of Tolsa) or modified as described for example in patent applications WO2016/174629, WO2016/174628 or WO2018/078500A1.

Optionally, the aqueous suspension to be dried may contain residues of the previous reactions, in amounts generally not higher than 3% by weight with respect to the suspension.

Preferably, the pH of the aqueous suspension to be dried is between 5 and 9.

Preferably, the liquid phase of the suspension comprises predominantly water (i.e. at least 80%, 90% or 95% by weight with respect to the weight of the liquid phase), more preferably the liquid phase consists of water alone.

Optionally, the aqueous suspension may comprise ethanol, propanol, isopropanol or butanol, in amounts preferably less than 10% by weight with respect to the weight of the liquid phase.

The aqueous suspension to be dried may be prepared according to any possible operating mode, provided that the final composition is according to the above-mentioned preferences and is suitable for nebulisation.

In one embodiment, the aqueous suspension to be dried may be directly prepared by addition of the silica (A) and the fibres (B), both in powder form, to the aqueous phase under stirring, according to known techniques.

In one embodiment, the aqueous suspension to be dried may be prepared by mixing two distinct aqueous suspensions, one comprising the silica (A) and the other the fibres (B).

These suspensions, in turn, may be prepared according to different modes and concentrations according to known techniques.

For example, the suspensions may be prepared from the powders, for example from silica (A), from fibres (B) or from a mixture thereof, by suspending them in an aqueous medium.

The powders may be commercial or prepared ad hoc, for example by filtration and subsequent drying of the respective filter cakes or mixtures thereof.

Typically the preparation of the powders, of silica (A) and of fibres (B), comprises the separation of the solids from the reaction media by filtration, followed if necessary by washing.

Filtration may be carried out using any suitable technique, for example using press filters, band filters or rotating filters.

In a preferred embodiment, in order to minimize powderiness, it is preferable to directly use the wet filtration cakes of silica (A), of fibres (B) or both.

In this case, the aqueous suspension comprising said silica (A) and said fibres (B) is prepared starting from wet filtration cakes of silica (A) and of fibres (B).

In this case, the amount of residual water contained in the cakes could be sufficient to provide, after appropriate disintegration, the aqueous suspensions with the correct viscosity, i.e. already suitable for nebulisation. Alternatively, it is possible to proceed with routine adjustments of the quantity of water in order to make the final aqueous suspension suitable for nebulisation.

In one embodiment, the wet filtration cakes of silica (A) and fibres (B) are disgregated separately, and the two aqueous suspensions joined together to give the aqueous suspension to be dried suitable for nebulisation.

In one embodiment, the wet filtration cakes of silica (A) and fibres (B) are premixed and disgregated together to give the aqueous suspension to be dried suitable for nebulisation.

The wet filtration cake of silica (A) may generally have a residual water content of between 70 and 95% by weight, with respect to the total weight of the cake itself.

The wet filtration cake of fibres (B) may generally have a residual water content of between 70 and 95% by weight, with respect to the total weight of the cake itself.

The residual water content of the filtration cakes may be evaluated, for example, by thermogravimetric analysis.

The use of wet fibres, for example from previous operations to extract the fibres from the minerals from the aqueous phase or to modify them, also allows avoiding a drying step, with undoubted benefits in terms of time and costs.

The skilled in the art, on the basis of the residual water content in the filtration cakes of silica (A), of fibres (B) or of a mixture thereof is able to add the appropriate amount of water during the disgregation step or thereafter, in order to obtain a final aqueous suspension suitable for nebulisation drying.

The disintegration of the filtration cakes may be carried out according to known techniques such as for example by mixing in ball mills or in colloid mills or with mechanical stirrers.

Optionally, the viscosity of the suspension to be dried may be further reduced by adding, preferably during the disgregation, aluminium compounds, for example sodium aluminate, as described in document FR2536380.

Alternatively, it is possible to prepare the suspension to be dried by mixing the silica (A) and the fibres (B) preparation suspensions, without proceeding with the isolation of the solids by, for example, filtration. For example, subject to possible pH adjustment, the aqueous silica (A) suspensions may be used by acid precipitation of silicates according to known techniques and/or the aqueous suspensions of preparation or derivatisation of the silicate fibres (B), for example by derivatisation with organic reagents or by acid depletion or by deposition of amorphous silica to yield the modified fibres.

Optionally, those skilled in the art will be able to adjust the water volume of the final suspension, by partial evaporation or filtration or by dilution, or make other possible corrections of the medium to modify, for example, the rheology or pH thereof in order to make the resulting suspension suitable for drying by nebulisation.

In a preferred embodiment, the process comprises the preparation of an aqueous suspension comprising precipitated amorphous silica (A) and sepiolite fibres or modified sepiolite fibres (B) in a weight ratio A/B of between 0.9:1 and 1.1:1 and in a total amount A + B equal to at least 10% by weight, with respect to the weight of the suspension, by disgregation of the wet filtration cakes of said silica (A) and of said fibres (B). The final aqueous suspension is then subjected to nebulisation or spray drying to give the microbeads.

Spray drying may be carried out with conventional spray apparatus, for example with spray driers with a turbine, spray driers with a nozzle, single or double fluid, or preferably with driers with a pressure nozzle.

The temperature of the hot air from the spray dryer may vary widely, usually from 100° to 700°C, 110° to 650°C or 120° to 600°C.

The spraying speed of the suspension to be dried depends on the type of apparatus, the size, the evaporative capacity, the temperature of the hot air, the solid content of the suspension to be dried and the spraying pressure.

The spraying pressure may vary widely, generally from 10 to 80 bar, from 15 to 60 bar or from 20 to 40 bar.

Preferably, the nebulisation nozzles of the atomizers have a hole with a diameter of between 1 and 3 mm.

The man skilled in the art is able to modify the operating conditions of the drier in the best way, in order to obtain microbeads of a certain diameter and granulometric distribution starting from the aqueous suspensions suitable for nebulisation described herein.

### Carbon nanotubes

Carbon nanotubes are prepared by passing a carbon-containing gaseous compound, typically methane, ethylene or acetylene, through a metal nanoparticle-based catalyst at high temperatures (equal to or greater than 500°C, typically around 700°C).

The catalysts typically used are based on Fe-Ni, Fe-Co, or Fe-Mo supported on SiO₂, Al₂O₃ or MgO, and are typically prepared with the impregnation, co-precipitation and sol-gel techniques. In the impregnation technique, the support is preformed, while in the co-precipitation and sol-gel techniques both the support and the catalyst are formed starting from soluble salts of their components, such as for example nitrates and/or carbonates, causing their co-precipitation by adding suitable basic substances. In the sol-gel technique, the formation of the gel is typically achieved by adding gelling organic substances.

Examples of preparation of catalysts used for the synthesis of carbon nanotubes are described in Avdeeva, LB et al., "Iron-containing catalysts of methane decomposition: accumulation of filamentous carbon", Applied Catalysis A: General 228, 53-63 (2002), Reshetenko, T.V. et al., "Coprecipitated iron-containing catalysts (Fe-Al2O3, Fe-Co-Al2O3, Fe-Ni-Al2O3) for methane decomposition at moderate temperatures: Part II. Evolution of the catalysts in reaction", Applied Catalysis A: General 270, 87-99 (2004), Kukovecz, A. et al., "Catalytic synthesis of carbon nanotubes over Co, Fe and Ni containing conventional and sol-gel silica-aluminas", Physical Chemistry Chemical Physics 2, 3071-3076 (2000) and in patent applications WO2007/93337, WO2007/33438 and EP2213369.

Examples of the preparation of carbon nanotubes with the above catalysts are also described in patents and patent applications, such as, for example, EP1797950, EP2223743, US7923615, US8398949, US2001/0014307 and WO2013/105779.

Carbon nanotubes may be single-walled or multi-walled. Single-walled carbon nanotubes may be thought of as a layer of carbon atoms rolled up on itself. Multi-walled carbon nanotubes comprise multiple layers of carbon atoms rolled up on themselves.

Advantageously, the elastomeric composition according to the present invention comprises carbon nanotubes prepared with the process described in WO2018/109661, characterised in that it uses a substantially free iron and/or aluminium oxide-based catalyst, i.e. with a content lower than 0.1ppm, of Co, Ni and Mo.

Commercial examples of carbon nanotubes which may be used in the elastomeric composition according to the present invention are those manufactured and distributed, for example, by the company Nanocyl Inc., under the trade name NC7000^{™} and by the company Ocsial Europe Sarl, under the trade name Tuball^{™}.

The elastomeric composition according to the present invention comprises from 0.1 to 10 phr, preferably from 0.1 to 5 phr, more preferably from 0.2 to 2 phr of carbon nanotubes.

### Carbon black.

According to a preferred embodiment, the carbon black reinforcing filler which may be used in the present invention may be selected from those having a surface area of not less than 20 m²/g (as determined by STSA - Statistical Thickness Surface Area - according to ISO 18852:2005).

According to a preferred embodiment, the carbon black is present in the elastomeric composition in an amount greater than about 10 phr, more preferably greater than about 15 phr. Preferably, the carbon black is present in the elastomeric composition in an amount of less than about 55 phr, more preferably less than about 50 phr.

### Vulcanising agent

The elastomeric composition may be vulcanised according to known techniques, in particular with sulphur-based vulcanising systems commonly used for diene elastomeric polymers. To this end, in the elastomeric compound obtained from the elastomeric composition after one or more thermomechanical treatment steps, a sulphur-based vulcanising agent is incorporated together with vulcanisation accelerants. In the final treatment step, the temperature is generally kept below 120°C and preferably below 100°C, so as to prevent any undesired pre-crosslinking phenomena.

Preferably, said vulcanising agent comprises sulphur-based vulcanising systems comprising sulphur or sulphur-containing molecules (sulphur donors) together with vulcanisation accelerants and/or activators known in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid.

The accelerants which are commonly used may be selected from: dithiocarbamates, guanidine, thiourea, thiazoles, sulphenamides, thiurams, amines, xanthates or mixtures thereof.

According to a preferred embodiment, said vulcanisable elastomeric composition comprises an amount of vulcanising agent equal to or greater than about 1 phr, preferably equal to or greater than about 2 phr.

Preferably, the amount of vulcanising agent is less than or equal to about 7.5 phr, preferably less than or equal to about 7.

Advantageously, the amount of sulphur is between about 2 phr and about 6.5 phr.

### Coupling agent

The vulcanisable elastomeric composition according to the present invention may optionally further comprise at least one silane coupling agent able to interact with the silicate fibres and the conventional silica optionally present as reinforcing filler and bind them to the diene elastomeric polymer during vulcanisation.

Preferably, the vulcanisable elastomeric composition comprises at least one coupling agent.

Preferably, the silane coupling agent which may be used in the present invention is selected from those having at least one hydrolyzable silane group, which may be identified, for example, by the following general formula (I):

(R)₃Si-CₙH₂ₙ-X (I)

where the R groups, which may be the same or different, are selected from: alkyl, alkoxy or aryloxy groups or from halogen atoms, provided that at least one of the R groups is an alkoxy or aryloxy group or a halogen; n is an integer of between 1 and 6, inclusive; X is a group selected from: nitrous, mercapto, amino, epoxide, vinyl, imide, chlorine,-(S)ₘCₙH₂ₙ-Si-(R)₃ and -S-COR, where m and n are integers of between 1 and 6 inclusive and the R groups are as defined above.

Among the silane coupling agents, bis(3-triethoxysilylpropyl)tetrasulphide and bis(3-triethoxysilylpropyl)disulphide are particularly preferred. Said coupling agents may be used as such or as a suitable mixture with an inert filler (such as carbon black) so as to facilitate their incorporation into the vulcanisable elastomeric composition.

Preferably, said silane coupling agent is present in the vulcanisable elastomeric composition in an amount ranging between 0.1 phr and 20 phr, preferably between 0.5 phr and 10 phr.

### Other additives

The elastomeric composition may comprise other commonly used additives, selected on the basis of the specific application for which the composition is intended. For example, said materials may be admixed with: antioxidants, anti-ageing agents, plasticisers, adhesives, anti-ozone agents, modifying resins, or mixtures thereof.

In particular, in order to improve the processability, said vulcanisable elastomeric composition may be admixed with a plasticiser generally selected from mineral oils, vegetable oils, synthetic oils or mixtures thereof, such as, for example, aromatic oil, naphthenic oil, phthalates, soybean oil or mixtures thereof. The amount of plasticiser generally ranges from 0 phr and about 70 phr, preferably from about 5 phr to about 30 phr.

### Preparation of the elastomeric composition

Preferably, the vulcanisable elastomeric composition used to make a structural component of a tyre according to the present invention comprises, per 100 phr of diene elastomeric polymer, at least
(i) 5 phr to 50 phr, preferably 10 phr to 40 phr, of needle-shaped morphology silicate fibres having nanometric size,
(ii) 0.1 phr to 10 phr of carbon nanotubes,
(iii) optionally, 5 phr to 60 phr of carbon black and/or conventional silica,
(iv) 0.1 phr to 12 phr of at least one vulcanising agent, and
(v) 0.1 phr to 15 phr of a coupling agent.

The vulcanisable elastomeric composition for components of tyres according to the present invention is characterized by one or more of the following preferred aspects taken alone or in combination with one another.

The elastomeric composition may be prepared by mixing the required amount of diene elastomeric polymer with any needle-shaped morphology silicate fibres having nanometric size, the carbon nanotubes, the carbon black and/or the conventional silica possibly present, the vulcanising agent, the coupling agent and any other additives possibly present according to techniques known in the sector.

The mixing may be carried out, for example, using at least one batch mixer and/or at least one continuous mixer.

The needle-shaped morphology silicate fibres of nanometric size may be fed to said at least one batch mixer and/or at least one continuous mixer according to any method known to those skilled in the art and suitable for the purpose.

Advantageously, the needle-shaped morphology silicate fibres of nanometric size are fed in the form of (a1) a solid masterbatch elastomeric composition comprising needle-shaped morphology silicate fibres of nanometric size dispersed in at least one diene elastomer, prepared as described above and in WO2018/116125, and/or (a2) microbeads comprising needle-shaped morphology silicate fibres of nanometric size and silica, prepared as described above and in WO2019/106562.

The solid masterbatch elastomeric composition may be fed in bale or sheet material form. The incorporation of the microbeads can take place with apparatus and according to conventional methods, which do not require particular modifications of the plants.

The mixing may be carried out, for example, using an open mixer of the "open-mill" type or an internal mixer of the type with tangential rotors (Banbury^{®}) or with interpenetrating rotors (intermix), or in continuous mixers of the Ko-Kneader^{™} type (Buss^{®}) or of the twin-screw or multi-screw type.

In the context of the present description and the subsequent claims, the term "batch mixer (or mixing device)" indicates a mixing device configured to be periodically fed with the various ingredients of the material to be prepared in predefined amounts and for mixing them for a predetermined time in order to obtain a batch of said material.

At the end of the mixing step, the entire batch of material obtained is completely discharged from the mixing device in a single solution.

In the context of the present description and of the subsequent claims, the term "continuous mixer (or mixing device)" indicates a mixing device configured to continuously feed the ingredients of the material to be prepared, typically by means of controlled dosage dispensers. to mix the ingredients in order to produce the material and to discharge it in a continuous flow (except possible stoppages of the mixing device due to maintenance, or change of the recipe of the material).

In the jargon of the elastomeric mixers sector, the continuous mixing device is sometimes referred to as: "mixing extruder", which is herein considered equivalent to a "continuous mixer".

The continuous mixer (in particular its active elements, such as screws or mixer satellites) is then provided with mixing portions able to impart a high shear stress to the material being mixed and, alternating with the mixing portions, transport portions able to impart a thrust to the material being processed to feed it from one longitudinal end to the other of the internal chamber. It may further be provided with possible redistribution portions.

Further examples of continuous mixing devices are twin-screw or multi-screw mixers (e.g. ring mixers), co-penetrating and co-rotating, or planetary mixing devices.

Both the batch mixer and the continuous mixer are able to impart to the material to be produced with them sufficient energy to mix and homogeneously disperse the various components even in the case of cold feeding of the ingredients and, in the case of a material comprising an elastomeric component, to chew the elastomeric compound raising the temperature thereof so as to make it workable and plastic to facilitate the incorporation and/or distribution of the ingredients within the elastomeric polymeric matrix.

The elastomeric compound thus obtained may then be stored or sent directly to the subsequent production steps of the tyre according to the present invention.

### The tyre

According to an embodiment, the tyre for vehicle wheels according to the invention comprises
- a carcass structure comprising at least a carcass ply having opposite lateral edges associated to respective bead structures;
- optionally a belt structure applied in radially external position with respect to the carcass structure;
- a tread band applied in a radially external position to said carcass structure and to said belt structure, if present, and
- optionally, an underlayer and/or an anti-abrasive strip and/or a sidewall and/or a sidewall insert and/or a mini-sidewall and/or an underliner and/or a rubberising layer and/or flipper and/or chafer and/or a bead filler and/or a sheet.

According to one embodiment, the structural component intended for the tyre according to the invention is an anti-abrasive strip and/or a sidewall and/or an internal component of the tyre.

Preferably, the internal component of the tyre is selected from the group consisting of carcass structure rubber layers, belt structure rubber layers, underlayer, sidewall insert, mini-sidewall, flipper, chafer, underliner and sheets.

The carcass structure is intended to give the tyre the desired features of structural integrity and strength, while the belt structure is also intended to transfer to the carcass structure the lateral and longitudinal stresses to which the running tyre is subjected as a result of the contact with the road surface, so as to impart the desired performance of grip, driving stability, controllability, directionality, road grip and comfort. The belt structure may include an additional layer commonly known as a "zero degree belt". The zero degree reinforcing layer, when present, is instead intended to limit the radial elongation of the belt structure.

The tyre according to the invention may be used on two, three or four-wheeled vehicles. The tyre according to the invention may be for summer or winter use or for all seasons.

The tyre according to the invention may be a tyre for passenger cars, including both automobile tyres, such as for example the high-performance tyres, and tyres for light transport vehicles, for example vans, campers, pick-up, typically with total mass at full load equal to or less than 3500 kg. Therefore, tyres for heavy transport vehicles are excluded.

The tyre according to the invention may be a tyre for motorcycles, such as for example motorcycles belonging to the scooter, road enduro, custom, hypersport, supersport, and sport touring categories. The term "tyre for motorcycle wheels" means a tyre having a high curvature ratio (typically greater than 0.200), capable of reaching high angles of inclination (roll angles) during cornering of the motorcycle.

The tyre according to the present invention may be manufactured according to a process which comprises:
- building components of a green tyre on at least one forming drum;
- shaping, moulding and vulcanising the tyre;
wherein building at least one of the components of a green tyre comprises:
- manufacturing at least one green component comprising the vulcanisable elastomeric composition as described above.

### BRIEF DESCRIPTION OF THE FIGURES

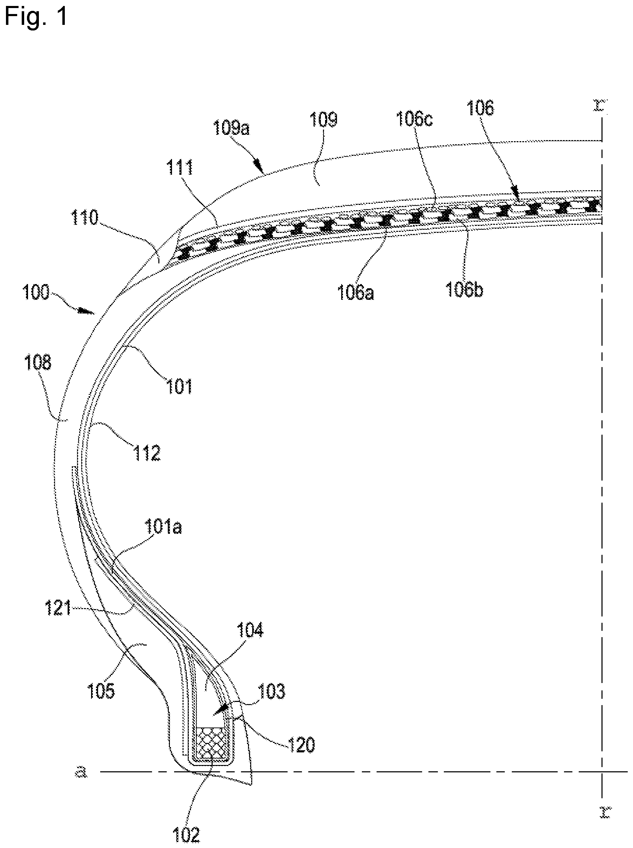

Figure 1 is a representation of a tyre for a car comprising one or more components according to the invention.

### DESCRIPTION OF EXAMPLES OF THE INVENTION

The description of some examples of the invention is set forth below for illustrative purposes only, and therefore without limitation.

Figure 1 shows a radial half-section of a tyre for vehicle wheels.

In Figure 1, "a" indicates an axial direction and "r" indicates a radial direction, in particular r-r indicates the outline of the equatorial plane. For simplicity, Figure 1 shows only a portion of the tyre, the remaining portion not shown being identical and arranged symmetrically with respect to the equatorial plane "r-r".

Tyre 100 for four-wheeled vehicles comprises at least one carcass structure, comprising at least one carcass layer 101 having respectively opposite end flaps engaged with respective annular anchoring structures 102, referred to as bead cores, possibly associated to a bead filler 104.

The carcass layer 101 is optionally made with an elastomeric composition.

The tyre area comprising the bead core 102 and the filler 104 forms a bead structure 103 intended for anchoring the tyre onto a corresponding mounting rim, not shown.

The carcass structure is usually of radial type, i.e. the reinforcing elements of the at least one carcass layer 101 lie on planes comprising the rotational axis of the tyre and substantially perpendicular to the equatorial plane of the tyre. Said reinforcing elements generally consist of textile cords, such as rayon, nylon, polyester (for example polyethylene naphthalate, PEN). Each bead structure is associated to the carcass structure by folding back of the opposite lateral edges of the at least one carcass layer 101 around the annular anchoring structure 102 so as to form the so-called carcass flaps 101a as shown in Figure 1.

In one embodiment, the coupling between the carcass structure and the bead structure can be provided by a second carcass layer, not shown in Figure 1, applied in an axially external position with respect to the first carcass layer.

An anti-abrasive strip 105 possibly made with an elastomeric composition according to the present invention is arranged in an external position of each bead structure 103.

The carcass structure is associated to a belt structure 106 comprising one or more belt layers 106a, 106b placed in radial superposition with respect to one another and with respect to the carcass layer, having typically textile and/or metallic reinforcing cords incorporated within a layer of vulcanised elastomeric material.

Such reinforcing cords may have crossed orientation with respect to a direction of circumferential development of tyre 100. By "circumferential" direction it is meant a direction generally facing in the direction of rotation of the tyre.

At least one zero-degree reinforcing layer 106c, commonly known as a "0° belt", may be applied in a radially outermost position to the belt layers 106a, 106b, which generally incorporates a plurality of elongated reinforcing elements, typically metallic or textile cords, oriented in a substantially circumferential direction, thus forming an angle of a few degrees (such as an angle of between about 0° and 6°) with respect to a direction parallel to the equatorial plane of the tyre, and coated with vulcanised elastomeric material.

A tread band 109 of vulcanised elastomeric material is applied in a position radially external to the belt structure 106.

Moreover, respective sidewalls 108 of vulcanised elastomeric material are applied in an axially external position on the lateral surfaces of the carcass structure, each extending from one of the lateral edges of tread 109 at the respective bead structure 103.

In a radially external position, the tread band 109 has a rolling surface 109a intended to come in contact with the ground. Circumferential grooves, which are connected by transverse notches (not shown in Figure 1) so as to define a plurality of blocks of various shapes and sizes distributed over the rolling surface 109a, are generally made on this surface 109a, which for simplicity is represented smooth in Figure 1.

An under-layer 111 of vulcanised elastomeric material can be arranged between the belt structure 106 and the tread band 109.

A strip consisting of elastomeric composition 110, commonly known as "mini-sidewall", of vulcanised elastomeric material can optionally be provided in the connecting zone between sidewalls 108 and the tread band 109, this mini-sidewall generally being obtained by co-extrusion with the tread band 109 and allowing an improvement of the mechanical interaction between the tread band 109 and sidewalls 108. Preferably, the end portion of sidewall 108 directly covers the lateral edge of the tread band 109.

In the case of tubeless tyres, a rubber layer 112, generally known as "liner", which provides the necessary impermeability to the inflation air of the tyre, can also be provided in a radially internal position with respect to the carcass layer 101.

The rigidity of the tyre sidewall 108 may be improved by providing the bead structure 103 with a reinforcing layer 120 generally known as "flipper" or additional strip-like insert.

The flipper 120 is a reinforcing layer which is wound around the respective bead core 102 and the bead filler 104 so as to at least partially surround them, said reinforcing layer being arranged between the at least one carcass layer 101 and the bead structure 103. Usually, the flipper is in contact with said at least one carcass layer 101 and said bead structure 103.

Flipper 120 typically comprises a plurality of textile cords incorporated within a layer of vulcanised elastomeric material.

The bead structure 103 of the tyre may comprise a further protective layer which is generally known by the term of "chafer" 121 or protective strip and which has the function of increasing the rigidity and integrity of the bead structure 103.

Chafer 121 usually comprises a plurality of cords incorporated within a rubber layer of vulcanised elastomeric material. Such cords are generally made of textile materials (such as aramide or rayon) or metal materials (such as steel cords).

A layer or sheet of elastomeric material may be arranged between the belt structure and the carcass structure (not shown in Figure 1). The layer may have a uniform thickness. Alternatively, the layer may have a variable thickness in the axial direction. For example, the layer may have a greater thickness close to its axially external edges with respect to the central (crown) zone.

Advantageously, the layer or sheet may extend on a surface substantially corresponding to the extension surface of said belt structure.

In a preferred embodiment, a layer or sheet of elastomeric material as described above can be placed between said belt structure and said tread band, said additional layer or sheet extending preferably on a surface substantially corresponding to the extension surface of said belt structure.

The vulcanisable elastomeric composition according to the present invention may be advantageously incorporated in one or more of the tyre components selected from an anti-abrasive strip and/or a sidewall and/or an internal component of the tyre.

Preferably, the internal component of the tyre is selected from the group consisting of carcass structure rubber layers, belt structure rubber layers, underlayer, sidewall insert, mini-sidewall, flipper, chafer, underliner and sheets.

According to an embodiment not shown, the tyre may be a tyre for motorcycle wheels which is typically a tyre that has a straight section featuring a high tread camber.

### Example 1

### Preparation of microbeads from a mixture of a suspension of modified sepiolite fibres with acids B1 and a precipitated silica suspension A1

2,160 kg of sepiolite fibres (Pangel S9 from Tolsa) were added under stirring to 58,000 Kg of deionized water. To the suspension, over a period of 5 hours, at 70°C, 339 kg of 98% by weight sulphuric acid and 2,371 kg of deionised water were added to obtain a suspension of modified sepiolite fibres B1.

The resulting suspension B1 was mixed with suspension A1 obtained after the reaction for the preparation of precipitated silica, containing 2,160 kg of precipitated silica (weight ratio of silica:fibres of sepiolite modified in acids 1:1). The silica used corresponds to the commercial grade Ebrosil H-155 AT. The resulting suspension C1 is filtered on a filter press and washed with deionised water.

The cake thus obtained was mixed with deionized water and disgregated to obtain a slurry of precipitated silica and sepiolite modified at 12% by weight of solid. This suspension is dried by nebulisation, providing the microbeads M1. Spray drying was performed with a pressure nozzle. The dryer hot air temperature is between 450° and 650°C, the spraying pressure around 20 bar and the nebulisation spray nozzles of the nebulisers have a 2 mm diameter hole.

### Example 2

### Preparation of microbeads from a mixture of an organically modified suspension of sepiolite fibres B2 and a precipitated silica suspension A2

1,260 kg of organically modified sepiolite fibres (Pangel B5 of Tolsa) were added to about 13,400 Kg of deionized water under stirring to obtain a suspension of sepiolite fibres B2 modified to 8.6% by weight of solid.

5,762 Kg of a suspension in water A2 of silica precipitated at 20% by weight (equal to 1,152 kg of silica) were added under stirring to suspension B2, so as to have a weight ratio A/B between silica and modified sepiolite fibres around 1:1. The silica used corresponds to the commercial grade Ebrosil H-155 AT.

The resulting suspension was dried by spray-drying, providing microbeads M2 including silica and modified sepiolite fibres in a 1:1 weight ratio.

Spray drying was performed with a pressure nozzle. The dryer hot air temperature is between 400° and 500°C, the spraying pressure around 20 bar and the nebulisation spray nozzles of the nebulisers have a 2 mm diameter hole.

### Example 3

### Preparation of a solid masterbatch elastomeric composition (MB1) comprising silicate fibres with needle-shaped morphology of nanometric size (Pangel B5)

30 kg of organically modified sepiolite fibres (commercial Pangel B5) were suspended in 500 kg of deionised water in a reactor and stirred for 40 min at 800 rpm to give a uniform suspension (A).

50 kg of Von Bundit HA latex (solid content 60% w/v, equal to 30 kg of solid, pH from 9 to 11, density 0.95 g/cm³) were diluted with 150 kg of water and stirred for 10 min at 400 rpm to give a suspension (B).

160 kg of suspension (B) were added over 10 minutes to suspension (A) (reverse addition) kept under stirring at 350 rpm. The stirring was then increased to 200 rpm and the remaining 40 kg of suspension (B) were added in another 5 minutes. The suspension thus obtained (C) was kept under stirring at 200 rpm for a further 5 minutes, during which another 40 kg of water were added.

The coagulate was filtered, washed with about 1000 kg of water and dried in an oven at 95°C for 16 h, obtaining 59 kg of composition MB1 (98% yield) with a fibre content equal to 101.3 phr determined by thermogravimetric analysis (TGA).

The determination of the weight loss profile was carried out with the apparatus Mettler Toledo TGA/DSC1 Star-e System and, in a temperature range of from 150 to 800°C. The measurements were carried out using a temperature program which involves a step with inert gas (ramp from 25° to 150°C and a plateau at 150°C in nitrogen flow) and an oxidation step (ramp from 150° to 800°C in a flow of dry air).

The quantities of reagents used, the theoretical and experimental values relating to MB1 are shown in the following Table 1:

**Table 1**

| fibres | ²water | ³Total vol. | **⁴Total** vol. /fibres | ⁵fibers/solid w/w | Theoretical weight MB1 | Actual weight MB1 | Yield % MB1 | ⁶theoretical fibres MB1 | ⁷actual fibres MB1 |
|---|---|---|---|---|---|---|---|---|---|
| kg | kg | l | I/kg | Kg /Kg | Kg | Kg | % pp | phr | phr |
| 30 | 500 | 740 | 24.7 | 1 | 60 | 59 | 98% | 100 | 101.3 |

| | | | | | | | | | |
|---|---|---|---|---|---|---|---|---|---|
| Key: Latex quantity: 50kg; latex solid content: 30 Kg; 1: Commercial Pangel B5; 2: amount of water to suspend the fibres; 3: total volume of the final suspension obtained by mixing the suspension of the fibres with the latex; 4: ratio between the total volume of the suspension 3 and the weight of fibres; 5: ratio between weight of fibres and weight of solid contained in the latex; 6: theoretical fibre content in MB1; 7: actual fibre content in MB1 determined by TGA | | | | | | | | | |

### Example 4

### Preparation of elastomeric compositions for tyres

Using the preparations comprising the needle-shaped morphology silicate fibres having nanometric size of Examples 1-3, vulcanisable elastomeric compounds were prepared which were compared with a conventional elastomeric compound C1.

The comparison vulcanisable elastomeric compound (C1) comprises carbon black and conventional silica.

The comparison vulcanisable elastomeric compound (C2) comprises the solid masterbatch elastomeric composition (MB1) according to Example 1 comprising silicate fibres with needle-shaped morphology having nanometric size in replacement of a part of conventional carbon black.

The vulcanisable elastomeric compound of the invention (INV1) comprises the addition of carbon nanotubes and is free from conventional silica.

The vulcanisable elastomeric compound of the invention (INV2) comprises a reinforcing filler comprising the microbeads M2, a greater quantity of carbon nanotubes with respect to (INV1) and a further reduced quantity of carbon black with respect to the comparison compound (C2).

The vulcanisable elastomeric compound of the invention (INV3) comprises a reinforcing filler comprising the microbeads M1, a greater quantity of carbon nanotubes with respect to (INV2) and a further reduced quantity of carbon black with respect to the comparison compound (C2).

The vulcanisable elastomeric compound of the invention (INV4) comprises a reinforcing filler comprising a greater quantity of microbeads M1 and carbon nanotubes than (INV3), and is free of carbon black.

The following Table 1 shows the elastomeric compositions in phr of the vulcanisable elastomeric compounds C1, C2, INV1, INV2, INV3 and INV4.

**TABLE 1**

| | C1 | C2 | INV1 | INV2 | INV3 | INV4 |
|---|---|---|---|---|---|---|
| NR | 70 | 55 | 51 | 64 | 62 | 50 |
| BR | 30 | 30 | 30 | 30 | 30 | 30 |
| MB1 | - | 30 | 30 | - | - | - |
| M1 | - | - | - | - | 35 | 42 |
| M2 | - | - | - | 30 | - | - |
| CB1 | 52 | 37 | 37 | 18 | 18 | - |
| CNT1 | - | - | 5 | 7.5 | 10 | 25 |
| Silica | 10 | 10 | - | - | - | - |
| TESPT | 2.5 | 2.5 | 2.5 | 3.5 | 3.5 | 4.2 |
| ZnO | 3.5 | 3.5 | 3.5 | 3.5 | 3.5 | 3.5 |
| Stearic acid | 1 | 1 | 1 | 1 | 1 | 1 |
| Zinc stearate | 2.5 | 2.5 | 2.5 | 2.5 | 2.5 | 2.5 |
| 6PPD | 2.5 | 2.5 | 2.5 | 2.5 | 2.5 | 2.5 |
| TBBS 80 | 1.5 | 1.5 | 1.5 | 1.5 | 1.5 | 1.5 |
| Insoluble sulphur 67% | 4 | 4 | 4 | 4 | 4 | 4 |

| | | | | | | |
|---|---|---|---|---|---|---|
| NR: coagulated natural rubber, obtained by coagulation of natural rubber latex HA obtained by centrifugation and stabilised with ammonia (60% by weight - marketed by Von Bundit Co. Ltd); BR: polybutadiene (Europrene Neocis^{®} - Polymers Europe); M1: microbeads of Example 1; M2: microbeads of Example 2; MB1: solid masterbatch elastomeric composition of Example 3; CB1: Carbon black with surface area 91 m²/g, N375, Cabot Corporation; CNT1: MultiWall Carbon Nanotubes prepared as described in WO2018/109661 at 20% natural rubber; Silica: Ultrasil VN3 GR (BET specific surface area 180 m²/g), Evonik TESPT: bis[3-(triethoxysilyl)propyl]tetrasulphide, SI69^{®}, Evonik ZnO: Zinc oxide, Zincol Ossidi; Stearic acid: Stearin, Undesa; Zinc stearate: Struktol A 50, Struktol Co. 6PPD: N-(1,3-dimethylbutyl)-N'-phenyl-p-phenylenediamine, Solutia Eastman; TBBS 80 : N-tert-butyl-2-benzothiazolsulphenamide, Lanxess Deutschland GmbH Insoluble sulphur 66%: Sulphur, Redball Superfine, International Sulphur Inc. | | | | | | |

CNT1 is a dispersion of carbon nanotubes in natural rubber which in the compound INV1 provides 1 phr of carbon nanotubes and 4 phr of natural rubber, in the compound INV2 it provides 1.5 phr of carbon nanotubes and 6 phr of natural rubber, in the compound INV3 it provides 2 phr of carbon nanotubes and 8 phr of natural rubber and in the compound INV4 it provides 5 phr of carbon nanotubes and 20 phr of natural rubber.

MB1 is a solid masterbatch elastomeric composition which in compounds C2 and INV1 provides 15 phr of needle-shaped morphology silicate fibres of nanometric size and 15 phr of natural rubber.

The microbeads M2 provide 15 phr of needle-shaped morphology silicate fibres of nanometric size and 15 phr of silica to the compound INV2.

The microbeads M1 provide 17.5 phr of needle-shaped morphology silicate fibres of nanometric size and 17.5 phr of silica to the compound INV3 and 21 phr of needle-shaped morphology silicate fibres of nanometric size and 21 phr of silica to the compound INV4.

All the components of the elastomeric composition, except for sulphur and the vulcanisation accelerant (TBBS), were mixed in an internal mixer (Brabender) for about 6 minutes (1^{st} step).

When the temperature of 135°C was reached, the material was mixed for another minute and then discharged. The non-vulcanisable elastomeric compound (green compound) was left to rest for one day, then the sulphur and the accelerant (TBBS) were added and mixing was carried out in the same mixer at about 80°C for 3 minutes (2^{nd} step), obtaining the vulcanisable elastomeric compound. Finally, the vulcanisable elastomeric compound was vulcanised at 170°C for 10 minutes.

### Example 5

### Evaluation of the properties of elastomeric compounds

The elastomeric compounds made as described in Example 4 were subjected to the following evaluations.

The green compounds were subjected to MDR (Moving Die Rheometer) measurements according to the ISO 6502 standard to verify the cross-linking kinetics thereof using an Alpha Technologies MDR2000 type rheometer. The tests were carried out at 170°C for 20 minutes at an oscillation frequency of 1.66 Hz (100 oscillations per minute) and an oscillation amplitude of ± 0.5°, measuring the time necessary to achieve an increase of two rheometric units (TS2) and the time necessary to achieve 30% (T30), 60% (T60) and 90% (T90), respectively, of the final torque value (Mf). The maximum torque value MH and the minimum torque value ML were measured.

The dynamic shear mechanical properties of the green compounds were evaluated using an Alpha Technologies RPA oscillating chamber rheometer (Rubber Process Analyser) with chamber geometry as described in ASTM D6601-19 Figure 1, applying the following method.

An approximately cylindrical test sample with a volume in the range from 4.6 to 5 cm³ was obtained by punching a sheet with a thickness of at least 5 mm of the green compound to be characterised. Subsequently, the chambers of the R.P.A. 2000 were preliminarily preheated to 170°C.

The sample was loaded between the chambers of the rheometer and the chambers were closed. Between the sample of the green compound and each chamber of the rheometer, two films were interposed to protect the chamber itself: in contact with the compound, a film of Nylon 6.6 cast about 25 microns thick and in contact with the chamber of the rheometer a polyester film about 23 microns thick. The sample was then vulcanised for a fixed time of 10 minutes at a temperature of 170°C while recording the vulcanisation curve, i.e. subjecting the sample to a sinusoidal deformation of 7% amplitude and 1.67 Hz frequency for the entire duration of the vulcanisation.

The temperature of the chambers of the rheometer was then brought to 70°C. After a total time of 10 minutes since the chamber temperature was set at 70°C, a sequence of dynamic measurements is performed at a constant temperature of 70°C by sinusoidally stressing the sample in torsion at a fixed frequency of 100 Hz and amplitude progressively increasing from 0.3% to 10%, carrying out 10 stabilisation cycles and 10 measurement cycles for each condition.

Always keeping the temperature of the rheometer chambers at 70°C, a dynamic measurement is then carried out by sinusoidally stressing the sample in torsion at the fixed frequency of 100 Hz and amplitude of 9%, carrying out 10 stabilisation cycles and 20 measurement cycles.

In this way, the following parameters were measured as an average of what was recorded in the 20 measurement cycles:
- dynamic shear elastic modulus G' at a strain amplitude of 9%,
- variation of the dynamic shear modulus d_G' between an amplitude of the sample deformation of 0.4% and one of 10%;
- torsion tan delta, i.e. the ratio between the viscous elastic modulus G" and the dynamic elastic modulus G', at a deformation amplitude of 9% (hereinafter Tan delta (9%)).

The Payne effect was assessed in absolute terms through the difference between moduli (G') and at 10% and 0.5%, and in relative terms as a percentage variation between 10% and 0.4% with respect to modulus G' at 9%.

The static mechanical properties of the vulcanised elastomeric compounds were evaluated according to the ISO 37-2011 standard at 23°C, on 5 Dumbell typre straight axis specimens. In this way the following parameters were measured:
- load at 10% elongation (Ca0.1),
- load at 50% elongation (Ca0.5),
- load at 100% elongation (Ca1),
- load at 300% elongation (Ca3),
- breaking load (CR), and
- % elongation at break (AR).

The dynamic mechanical properties in tension-compression of the vulcanised elastomeric compounds were evaluated using an Instron model 1341 dynamic device in the tension-compression mode the following modes.

A test piece of vulcanised elastomeric compound (170°C for 10 minutes) having a cylindrical shape (length = 25 mm; diameter = 18 mm), compressed preloaded up to a longitudinal deformation of 25% with respect to the initial length and maintained at the predetermined temperature (23°C, 70°C and 100°C) for the entire duration of the test.

After a waiting time of 2 minutes followed by a mechanical pre-conditioning of 125 cycles at 10Hz at 5% deformation amplitude with respect to the length under preload, the specimen was subjected to a dynamic sinusoidal stress having an amplitude of ± 3.5% of the length under pre-load, with a frequency of 10Hz.

In this way the following parameters were measured:
- dynamic elastic modulus E',
- tan delta, i.e. the ratio between the viscous dynamic modulus E" and the dynamic elastic modulus E'.

The surface electrical resistivity values of the vulcanised elastomeric compounds were determined in accordance with the experimental procedures described in the UNI 4288-72 standards.

The following Table 3 shows the results obtained from the characterisations carried out.

**TABLE 3**

| | C1 | C2 | INV1 | INV2 | INV3 | INV4 |
|---|---|---|---|---|---|---|
| MDR MEASURES | | | | | | |
| ML dN m | 3.55 | 2.58 | 1.97 | 2.21 | 3.19 | 2.33 |
| MH dN m | 27.59 | 25.36 | 22.93 | 21.28 | 25.12 | 20.40 |
| TS2 min | 1.00 | 0.66 | 0.97 | 1.32 | 1.30 | 1.18 |
| T30 min | 1.54 | 0.92 | 1.27 | 1.66 | 1.69 | 1.41 |
| T60 min | 2.09 | 1.30 | 1.70 | 2.12 | 2.16 | 1.89 |
| T90 min | 3.58 | 2.45 | 3.11 | 3.55 | 3.52 | 3.33 |

| STATIC MECHANICAL PROPERTIES | | | | | | |
|---|---|---|---|---|---|---|
| Ca0.1 MPa | 0.90 | 1.05 | 0.96 | 0.87 | 1.04 | 1.20 |
| Ca0.5 MPa | 2.24 | 3.11 | 3.02 | 2.85 | 3.34 | 3.91 |
| Ca1 MPa | 4.23 | 5.86 | 6.03 | 5.71 | 7.20 | 7.44 |
| Ca3 MPa | - | 16.23 | 15.93 | 15.12 | 16.74 | 15.73 |
| CR MPa | 15.99 | 21.3 | 22.7 | 21.5 | 22.84 | 23.5 |
| AR % | 301.87 | 378.5 | 423.0 | 427.3 | 408.45 | 500.9 |

| RPA MEASURES | | | | | | |
|---|---|---|---|---|---|---|
| d_G'(0.4-10) (MPa) | 3.02 | 3.80 | 2.64 | 1.87 | 1.77 | 1.91 |
| G' (9%) (MPa) | 2.34 | 2.06 | 1.71 | 1.63 | 1.90 | 1.58 |
| Tan Delta (9%) | 0.18 | 0.218 | 0.186 | 0.157 | 0.148 | 0.161 |

| DYNAMIC MECHANICAL PROPERTIES | | | | | | |
|---|---|---|---|---|---|---|
| E' MPa (23°C, 10Hz) | 7.35 | 8.42 | 8.64 | 7.99 | 9.01 | 8.46 |
| Tan Delta (23°C, 10Hz) | 0.198 | 0.197 | 0.164 | 0.156 | 0.155 | 0.149 |
| E' MPa (70°C, 10Hz) | 6.23 | 7.24 | 7.55 | 7.15 | 8.09 | 7.44 |
| Tan Delta (70°C, 10Hz) | 0.155 | 0.152 | 0.125 | 0.115 | 0.114 | 0.106 |
| E' MPa (100°C, 10Hz) | 6.01 | 7.03 | 7.58 | 7.27 | 8.14 | 7.38 |
| Tan Delta (100°C, 10Hz) | 0.131 | 0.131 | 0.109 | 0.099 | 0.098 | 0.093 |

| ELECTRICAL PROPERTIES | | | | | | |
|---|---|---|---|---|---|---|
| Surface resistivity (kΩ) | 10.0 | 205.0 | 4.6 | 45.0 | 15.0 | 11 |

The data in Table 3 confirmed the following:
- compound C2, in which part of the conventional carbon black (CB1) present in compound C1 (15 phr) was replaced with needle-shaped morphology silicate fibres of nanometric size, in the form of a solid masterbatch elastomeric composition MB1, consisting of 15 phr of natural rubber and 15 phr of organically modified sepiolite fibres (commercial Pangel B5) of nanometric size, showed a notable increase in the surface resistivity and a notable worsening of the Payne effect (d_G'(0.4-10));
- compound of the invention INV1, in which carbon nanotubes were added, showed a considerable reduction in resistivity, with a surprising reduction in hysteresis (Tan Delta) at all temperatures and a significant improvement in the Payne effect (d_G'(0.4-10));
- compounds of the invention INV2, INV3 and INV4, in which the quantity of carbon black has been further reduced to zero, the quantity of nanotubes increased, and the needle-shaped morphology silicate fibres of nanometric size were added in the form of silica microbeads M1 and M2, showed a further surprising reduction of hysteresis (Tan Delta) at all temperatures and a further significant improvement of the Payne effect (d_G'(0.4-10)), maintaining optimal resistivity values;
- the compounds of the invention INV1, INV2, INV3 and INV4 showed cross-linking kinetics and static mechanical properties in line with if not better than the reference, represented by the compound C1, especially in the case of INV4, which shows the best AR and CR in the presence of more than 16 phr needle-shaped morphology silicate fibres of nanometric size and more than 2 phr of CNT.

## Claims

1. A tyre for vehicle wheels comprising at least one structural component comprising a vulcanised elastomeric compound obtained by vulcanising a vulcanisable elastomeric compound made by mixing an elastomeric composition comprising (i) at least one diene elastomeric polymer, and (ii) a reinforcing filler comprising (a) needle-shaped morphology silicate fibres having nanometric size, (b) carbon nanotubes.

2. The tyre for vehicle wheels according to claim 1, wherein said elastomeric composition comprises per 100 phr of diene elastomeric polymer:
(i) 5 phr to 50 phr of needle-shaped morphology silicate fibres having nanometric size,
(ii) 0.1 phr to 10 phr of carbon nanotubes,
(iv) 0.1 phr to 12 phr of at least one vulcanising agent, and
(v) 0.1 phr to 15 phr of a coupling agent.

3. The tyre for vehicle wheels according to claims 1 or 2, wherein said reinforcing filler further comprises (c) carbon black and/or conventional silica.

4. The tyre for vehicle wheels according to claim 3, wherein said (c) carbon black and/or conventional silica is comprised in an amount from 5 phr to 60 phr.

5. The tyre for vehicle wheels according to any one of the preceding claims 1 to 4, wherein said needle-shaped morphology silicate fibres having nanometric size are selected from the group consisting of magnesium silicate fibres, aluminium silicate fibres, calcium silicate fibres, and mixtures thereof.

6. The tyre for vehicle wheels according to any one of claims 1 to 4, wherein said needle-shaped morphology silicate fibres having nanometric size are selected from the group consisting of sepiolite fibres, modified sepiolite fibres, paligorskite (also known as attapulgite) fibres, wollastonite fibres, imogolite fibres, and mixtures thereof.

7. The tyre for vehicle wheels according to any one of the preceding claims 1 to 6, wherein said needle-shaped morphology silicate fibres having nanometric size are added to said elastomeric composition in the form of (a1) a solid masterbatch elastomeric composition comprising needle-shaped morphology silicate fibres having nanometric size dispersed in at least one diene elastomer, and/or (a2) microbeads comprising needle-shaped morphology silicate fibres having nanometric size and silica.

8. The tyre for vehicle wheels according to claim 7, wherein said solid masterbatch elastomeric composition comprises at least one diene elastomer selected from the group consisting of natural rubber (NR), butadiene rubber (BR), styrene butadiene rubber (SBR), and mixtures thereof.

9. The tyre for vehicle wheels according to claim 7, wherein said solid masterbatch elastomeric composition comprises from 50 to 200 phr of said needle-shaped morphology silicate fibres having nanometric size per 100 phr of said at least one diene elastomer.

10. The tyre for vehicle wheels according to claim 7, wherein said microbeads have an average diameter in the range of 60 micrometres to 500 micrometres.

11. The tyre for vehicle wheels according to claim 10, wherein said microbeads have an average diameter in the range of 70 micrometres to 300 micrometres.

12. The tyre for vehicle wheels according to claim 7, wherein said microbeads comprise (A) silica and (B) needle-shaped morphology silicate fibres having nanometric size in an A/B weight ratio of between 0.7:1 and 10:1.

13. An elastomeric composition comprising per 100 phr of diene elastomeric polymer:
(i) 5 phr to 50 phr of needle-shaped morphology silicate fibres having nanometric size,
(ii) 0.1 phr to 10 phr of carbon nanotubes,
(iv) 0.1 phr to 12 phr of at least one vulcanising agent, and
(v) 0.1 phr to 15 phr of a coupling agent.

14. The elastomeric composition according to claim 13, wherein said elastomeric composition further comprises (iii) 5 phr to 60 phr of carbon black and/or conventional silica.

15. The elastomeric composition according to claim 13 or 14, wherein said needle-shaped morphology silicate fibres having nanometric size are selected from the group consisting of magnesium silicate fibres, aluminium silicate fibres, calcium silicate fibres, and mixtures thereof.

16. The elastomeric composition according to claim 13 or 14, wherein said needle-shaped morphology silicate fibres having nanometric size are selected from the group consisting of sepiolite fibres, modified sepiolite fibres, paligorskite (also known as attapulgite) fibres, wollastonite fibres, imogolite fibres, and mixtures thereof.

17. The elastomeric composition according to any one of claims 13 to 16, wherein said needle-shaped morphology silicate fibres having nanometric size are added to said elastomeric composition in the form of (a1) a solid masterbatch elastomeric composition comprising needle-shaped morphology silicate fibres having nanometric size dispersed in at least one diene elastomer, and/or (a2) microbeads comprising needle-shaped morphology silicate fibres having nanometric size and silica.

18. The elastomeric composition according to claim 17, wherein said microbeads have an average diameter in the range of 60 micrometres to 500 micrometres.

19. The elastomeric composition according to claim 17, wherein said microbeads comprise (A) silica and (B) needle-shaped morphology silicate fibres having nanometric size in an A/B weight ratio of between 0.7:1 and 10:1.

## Patentansprüche

1. Reifen für Fahrzeugräder, umfassend mindestens eine Strukturkomponente, umfassend eine vulkanisierte Elastomerverbindung, die durch Vulkanisieren einer vulkanisierbaren Elastomerverbindung erhalten wird, die durch Mischen einer elastomeren Zusammensetzung hergestellt wird, umfassend (i) mindestens ein elastomeres Dienpolymer und (ii) einen verstärkenden Füllstoff, umfassend (a) nadelförmige Silikatfasern, die eine nanometrische Größe aufweisen, (b) Kohlenstoffnanoröhren.

2. Reifen für Fahrzeugräder nach Anspruch 1, wobei die elastomere Zusammensetzung pro 100 phr an elastomerem Dienpolymer umfasst:
(i) 5 phr bis 50 phr nadelförmige Silikatfasern, die eine nanometrische Größe aufweisen,
(ii) 0,1 phr bis 10 phr Kohlenstoffnanoröhren,
(iv) 0,1 phr bis 12 phr mindestens eines Vulkanisationsmittels, und
(v) 0,1 phr bis 15 phr eines Haftvermittlers.

3. Reifen für Fahrzeugräder nach Anspruch 1 oder 2, wobei der verstärkende Füllstoff weiter (c) Ruß und/oder herkömmliche Kieselsäure umfasst.

4. Reifen für Fahrzeugräder nach Anspruch 3, wobei (c) der Ruß und/oder die herkömmliche Kieselsäure in einer Menge von 5 phr bis 60 phr umfasst ist.

5. Reifen für Fahrzeugräder nach einem der vorstehenden Ansprüche 1 bis 4, wobei die nadelförmigen Silikatfasern, die eine nanometrische Größe aufweisen, aus der Gruppe ausgewählt sind, die aus Magnesiumsilikatfasern, Aluminiumsilikatfasern, Calciumsilikatfasern und Gemischen davon besteht.

6. Reifen für Fahrzeugräder nach einem der Ansprüche 1 bis 4, wobei die nadelförmigen Silikatfasern, die eine nanometrische Größe aufweisen, aus der Gruppe ausgewählt sind, die aus Sepiolithfasern, modifizierten Sepiolitfasern, Paligorskit- (auch bekannt als Attapulgit) Fasern, Wollastonitfasern Fasern, Imogolitfasern, und Gemischen davon besteht.

7. Reifen für Fahrzeugräder nach einem der vorstehenden Ansprüche 1 bis 6, wobei die nadelförmigen Silikatfasern, die eine nanometrische Größe aufweisen, zu der elastomeren Zusammensetzung in Form von (a1) einer festen Masterbatch-elastomeren Zusammensetzung zugesetzt werden, die nadelförmige Silikatfasern mit nanometrischer Größe, dispergiert in mindestens einem Dien-Elastomer, und/oder (a2) Mikrokügelchen umfassen, die nadelförmige Silikatfasern mit nanometrischer Größe und Siliciumdioxid umfassen.

8. Reifen für Fahrzeugräder nach Anspruch 7, wobei die feste Masterbatchelastomere Zusammensetzung mindestens ein Dien-Elastomer umfasst, das aus der Gruppe ausgewählt ist, die aus Naturkautschuk (NR), Butadienkautschuk (BR), StyrolButadien-Kautschuk (SBR) und Gemischen davon besteht.

9. Reifen für Fahrzeugräder nach Anspruch 7, wobei die feste Masterbatchelastomere Zusammensetzung von 50 bis 200 phr der nadelförmigen Silikatfasern, die eine nanometrische Größe aufweisen, pro 100 phr des mindestens einen Dien-Elastomers umfasst.

10. Reifen für Fahrzeugräder nach Anspruch 7, wobei die Mikrokugeln einen durchschnittlichen Durchmesser im Bereich von 60 Mikrometern bis 500 Mikrometern aufweisen.

11. Reifen für Fahrzeugräder nach Anspruch 10, wobei die Mikrokugeln einen durchschnittlichen Durchmesser im Bereich von 70 Mikrometern bis 300 Mikrometern aufweisen.

12. Reifen für Fahrzeugräder nach Anspruch 7, wobei die Mikrokugeln (A) Kieselsäure und (B) nadelförmigen Silikatfasern, die eine nanometrische Größe aufweisen, in einem A/B-Gewichtsverhältnis von zwischen 0,7:1 und 10:1 umfassen.

13. Elastomere Zusammensetzung, die pro 100 phr eines elastomeren Dienpolymers Folgendes umfasst:
(i) 5 phr bis 50 phr nadelförmige Silikatfasern, die eine nanometrische Größe aufweisen,
(ii) 0,1 phr bis 10 phr Kohlenstoffnanoröhren,
(iv) 0,1 phr bis 12 phr mindestens eines Vulkanisationsmittels, und
(v) 0,1 phr bis 15 phr eines Haftvermittlers.

14. Elastomere Zusammensetzung nach Anspruch 13, wobei die elastomere Zusammensetzung weiter (iii) 5 phr bis 60 phr Ruß und/oder herkömmliche Kieselsäure umfasst.

15. Elastomere Zusammensetzung nach Anspruch 13 oder 14, wobei die nadelförmigen Silikatfasern, die eine nanometrische Größe aufweisen, aus der Gruppe ausgewählt sind, die aus Magnesiumsilikatfasern, Aluminiumsilikatfasern, Calciumsilikatfasern und Gemischen davon besteht.

16. Elastomere Zusammensetzung nach Anspruch 13 oder 14, wobei die nadelförmigen Silikatfasern, die eine nanometrische Größe aufweisen, ausgewählt sind aus der Gruppe, die aus Sepiolithfasern, modifizierten Sepiolitfasern, Paligorskit- (auch bekannt als Attapulgit) Fasern, Wollastonitfasern, Imogolitfasern, und Gemische davon besteht.

17. Elastomere Zusammensetzung nach einem der Ansprüche 13 bis 16, wobei die nadelförmigen Silikatfasern, die eine nanometrische Größe aufweisen, zu der elastomeren Zusammensetzung in Form von (a1) einer festen Masterbatch-elastomeren Zusammensetzung zugesetzt werden, die nadelförmige Silikatfasern, die eine nanometrische Größe aufweisen, dispergiert in mindestens einem Dien-Elastomer, und/oder (a2) Mikrokugeln umfasst, die nadelförmige Silikatfasern, die eine nanometrische Größe aufweisen, und Siliciumdioxid umfassen.

18. Elastomere Zusammensetzung nach Anspruch 17, wobei die Mikrokugeln einen durchschnittlichen Durchmesser im Bereich von 60 Mikrometern bis 500 Mikrometern aufweisen.

19. Elastomere Zusammensetzung nach Anspruch 17, wobei die Mikrokugeln (A) Kieselsäure und (B) nadelförmigen Silikatfasern, die eine nanometrische Größe aufweisen, in einem A/B-Gewichtsverhältnis von zwischen 0,7:1 und 10:1 umfassen.

## Revendications

1. Pneu pour roues de véhicule comprenant au moins un composant structurel comprenant un composé élastomère vulcanisé obtenu par vulcanisation d'un composé élastomère vulcanisable obtenu par mélange d'une composition élastomère comprenant (i) au moins un polymère élastomère diénique, et (ii) une charge de renforcement comprenant (a) des fibres de silicate à morphologie en aiguilles présentant une taille nanométrique, (b) des nanotubes de carbone.

2. Pneu pour roues de véhicule selon la revendication 1, dans lequel ladite composition élastomère comprend, pour 100 pce de polymère élastomère diénique :
(i) de 5 pce à 50 pce de fibres de silicate à morphologie en aiguilles présentant une taille nanométrique,
(ii) de 0,1 pce à 10 pce de nanotubes de carbone,
(iv) de 0,1 pce à 12 pce d'au moins un agent de vulcanisation, et
(v) de 0,1 pce à 15 pce d'un agent de couplage.

3. Pneu pour roues de véhicule selon les revendications 1 ou 2, dans lequel ladite charge de renforcement comprend en outre (c) du noir de carbone et/ou de la silice conventionnelle.

4. Pneu pour roues de véhicule selon la revendication 3, dans lequel ledit (c) noir de carbone et/ou silice conventionnelle est compris en une quantité de 5 pce à 60 pce.

5. Pneu pour roues de véhicule selon l'une quelconque des revendications précédentes 1 à 4, dans lequel lesdites fibres de silicate à morphologie en aiguilles présentant une taille nanométrique sont choisies dans le groupe consistant en les fibres de silicate de magnésium, les fibres de silicate d'aluminium, les fibres de silicate de calcium et des mélanges de celles-ci.

6. Pneu pour roues de véhicule selon l'une quelconque des revendications 1 à 4, dans lequel lesdites fibres de silicate à morphologie en aiguilles présentant une taille nanométrique sont choisies dans le groupe consistant en les fibres de sépiolite, les fibres de sépiolite modifiées, les fibres de paligorskite (également appelées attapulgite), les fibres de wollastonite, les fibres d'imogolite et des mélanges de celles-ci.

7. Pneu pour roues de véhicule selon l'une quelconque des revendications précédentes 1 à 6, dans lequel lesdites fibres de silicate à morphologie en aiguilles présentant une taille nanométrique sont ajoutées à ladite composition élastomère sous la forme (a1) d'une composition élastomère de mélange-maître solide comprenant des fibres de silicate à morphologie en aiguilles présentant une taille nanométrique dispersées dans au moins un élastomère diénique, et/ou (a2) de microbilles comprenant des fibres de silicate à morphologie en aiguilles présentant une taille nanométrique et de la silice.

8. Pneu pour roues de véhicule selon la revendication 7, dans lequel ladite composition élastomère de mélange-maître solide comprend au moins un élastomère diénique choisi dans le groupe consistant en le caoutchouc naturel (NR), le caoutchouc butadiène (BR), le caoutchouc styrène butadiène (SBR) et des mélanges de ceux-ci.

9. Pneu pour roues de véhicule selon la revendication 7, dans lequel ladite composition élastomère de mélange-maître solide comprend de 50 à 200 pce desdites fibres de silicate à morphologie en aiguilles présentant une taille nanométrique pour 100 pce dudit au moins un élastomère diénique.

10. Pneu pour roues de véhicule selon la revendication 7, dans lequel lesdites microbilles présentent un diamètre moyen compris dans la plage de 60 micromètres à 500 micromètres.

11. Pneu pour roues de véhicule selon la revendication 10, dans lequel lesdites microbilles présentent un diamètre moyen compris dans la plage de 70 micromètres à 300 micromètres.

12. Pneu pour roues de véhicule selon la revendication 7, dans lequel lesdites microbilles comprennent (A) de la silice et (B) des fibres de silicate à morphologie en aiguilles présentant une taille nanométrique dans un rapport pondéral A/B compris entre 0,7:1 et 10:1.

13. Composition élastomère comprenant, pour 100 pce de polymère élastomère diénique :
(i) de 5 pce à 50 pce de fibres de silicate à morphologie en aiguilles présentant une taille nanométrique,
(ii) de 0,1 pce à 10 pce de nanotubes de carbone,
(iv) de 0,1 pce à 12 pce d'au moins un agent de vulcanisation, et
(v) de 0,1 pce à 15 pce d'un agent de couplage.

14. Composition élastomère selon la revendication 13, dans laquelle ladite composition élastomère comprend en outre (iii) de 5 pce à 60 pce de noir de carbone et/ou de silice conventionnelle.

15. Composition élastomère selon la revendication 13 ou 14, dans laquelle lesdites fibres de silicate à morphologie en aiguilles présentant une taille nanométrique sont choisies dans le groupe consistant en les fibres de silicate de magnésium, les fibres de silicate d'aluminium, les fibres de silicate de calcium et des mélanges de celles-ci.

16. Composition élastomère selon la revendication 13 ou 14, dans laquelle lesdites fibres de silicate à morphologie en aiguilles présentant une taille nanométrique sont choisies dans le groupe consistant en les fibres de sépiolite, les fibres de sépiolite modifiées, les fibres de paligorskite (également appelées attapulgite), les fibres de wollastonite, les fibres d'imogolite et des mélanges de celles-ci.

17. Composition élastomère selon l'une quelconque des revendications 13 à 16, dans laquelle lesdites fibres de silicate à morphologie en aiguilles présentant une taille nanométrique sont ajoutées à ladite composition élastomère sous la forme (a1) d'une composition élastomère de mélange-maître solide comprenant des fibres de silicate à morphologie en aiguilles présentant une taille nanométrique dispersées dans au moins un élastomère diénique, et/ou (a2) de microbilles comprenant des fibres de silicate à morphologie en aiguilles présentant une taille nanométrique et de la silice.

18. Composition élastomère selon la revendication 17, dans laquelle lesdites microbilles présentent un diamètre moyen compris dans la plage de 60 micromètres à 500 micromètres.

19. Composition élastomère selon la revendication 17, dans laquelle lesdites microbilles comprennent (A) de la silice et (B) des fibres de silicate à morphologie en aiguilles présentant une taille nanométrique dans un rapport pondéral A/B compris entre 0,7:1 et 10:1.
